# EUROPEAN PATENT SPECIFICATION

(11) **EP 2 014 037 B1**
(45) Date of publication and mention of the grant of the patent: **05.01.2011**
(21) Application number: 07755644.7
(22) Date of filing: 17.04.2007
(51) Int. Cl.: H04L 12/66, H04M 3/42

(54) **HOVER TO CALL**
ANRUFGLEITER
SURVOL POUR PASSER UN APPEL

(30) Priority: 04.05.2006 US 746367 P; 03.10.2006 US 538209
(43) Date of publication of application: 14.01.2009
(73) Proprietor: Microsoft Corporation, Redmond, WA 98052-6399 (US)
(72) Inventor: CHU, Lon-Chan, Redmond, Washington 98052-6399 (US); LEELAPHISUT, Pitak, Redmond, Washington 98052-6399 (US); VEMPARALA, Praveen Kumar, Redmond, Washington 98052-6399 (US)
(74) Representative: Goddar, Heinz J.
(86) International application number: PCT/US2007/009451
(87) International publication number: WO 2007/130274

(56) References cited:
- KR-A- 20010 085 120
- KR-A- 20010 085 120
- KR-A- 20010 090 668
- KR-A- 20010 091 580
- US-A1- 2002 003 469
- US-B1- 7 003 327
- US-B1- 7 003 327

## Description

### BACKGROUND

Voice over Internet Protocol (VOIP) is a technology that allows users to make telephone calls using a broadband Internet connection instead of a traditional telephone line. Some services using VOIP may only allow users to call other people who are also using VOIP; however, many services also allow users to call anyone who has a telephone number - including local, long distance, mobile, and international numbers. While some services only work over a computer or a special VOIP telephone, other services allow use of a traditional telephone through an adaptor.

To encourage the use of VOIP, technology providers have sought ways to make VOIP more convenient and efficient to use. For example, some providers of VOIP applications have developed technology that identifies potential telephone numbers in content on the Internet by highlighting telephone numbers found in a web page and associating a hyperlink to initiate a telephone call.

However, the above-described technology that highlights telephone numbers have suffered from several user experience problems. For example, sometimes the highlights have been intrusive and have made the web page difficult to read. Additionally, the use of highlights has increased the rendering time for web pages because the software that performs the highlighting needs to parse through the entire page in order to find and recognize all of the telephone numbers, associate hyperlinks to these telephone numbers, and highlight the telephone numbers.

US 7,003,327 B1 discloses a method and apparatus for implementing a heuristic user interface for a mobile device that assists a user with the management and utilization of contact identifiers (e.g. phone numbers, facsimile numbers, e-mail addresses and uniform resource identifiers). Content stored on or being processed by a mobile device is analysed for the presence of predetermined classes of contact identifiers.

US 2002/0003469 A1 discloses a method of communicating electronic information via a display device having a matrix of movable tactile elements. The method includes displaying a representation of a file containing hyper text links on a first portion of the matrix, and displaying a list of the hypertext links on a second portion of the matrix. The representation may include graphical elements and text symbols such as Braille.

KR 2001/0085120 A discloses a method for a connection with an internet phone service when clicking a telephone number on a window.

### SUMMARY

The technology described herein facilitates the use of a communication system by automating a telephone call in response to a user hovering over or selecting a telephone number within content of a user interface.

When a user hovers over a telephone number (or other indication of a target of a voice communication) on a web page (or other interface), the telephone number will be highlighted and the user will be provided with the opportunity to make a call using the highlighter number. If the user clicks on (or otherwise selects) the highlighted telephone number, the telephone number will be provided to a VOIP application (or other communication application) that can make a telephone call using that number. If the user moves away without clicking on the highlighted telephone number, the highlight will disappear. In alternative embodiments, a user can select text in a web page (or other interface) and, if there is a telephone number in the selected text, that telephone number can be automatically provided to the VOIP application to facilitate making a call. In another embodiment, the system finds telephone numbers in content and replaces those telephone number with hyperlinks to enable the behavior described herein

One embodiment includes determining whether content is an indication of a target in response to a user hovering over or near the content, identifying the indication of the target in response to the determination, receiving a selection of the indication of the target, and establishing a voice connection using the indication of the target in response to the receiving of the selection of the indication of the target. Another embodiment includes determining whether content is an indication of a target including normalizing the content, matching the normalized content to a normalized pattern, and matching the content to a raw pattern associated with the normalized pattern. The indication of the target is visually identified within the content in response to a user hovering over or near the content. A voice connection is established using the indication of the target in response to receiving a selection of the indication of the target. Another embodiment includes displaying content from a storage device in a user interface, receiving a selection of a subset of content, determining whether the subset of content includes a proper identification of a target, and causing an establishment of a voice connection over a data network using the proper indication of the target and a communication interface.

The technology described herein can be implemented using hardware, software, or a combination of both hardware and software. The software used is stored on one or more processor readable storage devices including hard disk drives, CD-ROMs, DVDs, optical disks, floppy disks, tape drives, RAM, ROM, flash memory, or other suitable storage devices. This software can be used to program one or more processors to perform the functions described herein. In alternative embodiments, some or all of the software can be replaced by dedicated hardware including custom integrated circuits, gate arrays, FPGAs, PLDs, and special purpose computers. An exemplar apparatus that can perform the functions described herein includes one or more processors in communication with a storage device and a communication interface.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Figure 1 is a block diagram of one embodiment of a system that provides for voice communication over a network.

Figure 2 is a block diagram of one embodiment of the components on a client device.

Figure 3 is a block diagram of one embodiment of the components on a client device.

Figure 4 is a block diagram describing one embodiment of a computing system.

Figure 5 is a flowchart describing one embodiment of a process for initiating communication in response to a user hovering over an indication of a telephone number.

Figure 6 is a flowchart describing one embodiment of a process for recognizing a telephone number.

Figure 7 is a block diagram describing the process of implementing a VOIP connection.

Figure 8 is a flowchart describing one embodiment of a process for initiating communication in response to a user hovering over an indication of a telephone number.

Figure 9 is a flowchart describing one embodiment of a process for initiating communication in response to a user selecting content that includes a telephone number.

Figure 10 is a flowchart describing one embodiment of a process for initiating communication in response to a user selecting content that includes a telephone number.

Figure 11 is a flowchart describing one embodiment of a process for initiating communication in response to a user hovering over an indication ofa telephone number.

Figure 12 is a block diagram of one embodiment of the components on a client device.

Figure 13 is a flow chart describing one embodiment of a process for adding hyperlinks to a web page.

Figures 14A and 14B show a portion of a web page before and after hyperlinks are added.

Figure 15 is a flowchart describing one embodiment of a process for initiating communication in response to a user hovering over an indication of a telephone number.

Figure 16 is a flowchart describing one embodiment of a process performed by a communication system in response to a hyperlink.

Figure 17 is a flowchart describing one embodiment of a process performed by a communication system in response to a hyperlink.

### DETAILED DESCRIPTION

The technology described herein facilitates the use of a communication system by automating a voice connection in response to a user hovering over and/or selecting a telephone number within content of a user interface.

When a user hovers over a telephone number (or other indication of a target of a voice communication) on a web page (or other interface), the telephone number will be highlighted and the user will be provided with the opportunity to make a call using the highlighter number. If the user clicks on (or otherwise selects) the highlighted telephone number, the telephone number will be automatically provided to a VOIP application (or other communication application) that can make a call using that telephone number. If the user moves away without clicking on the highlighted telephone number, the highlight will disappear.

In alternative embodiments, a user can select text in a web page (or other interface) and, if there is a telephone number in the selected text, that telephone number can be automatically provided to the VOIP application to facilitate making a call. In some embodiments, the system finds telephone numbers in content and replaces those telephone number with hyperlinks to enable the behavior described above.

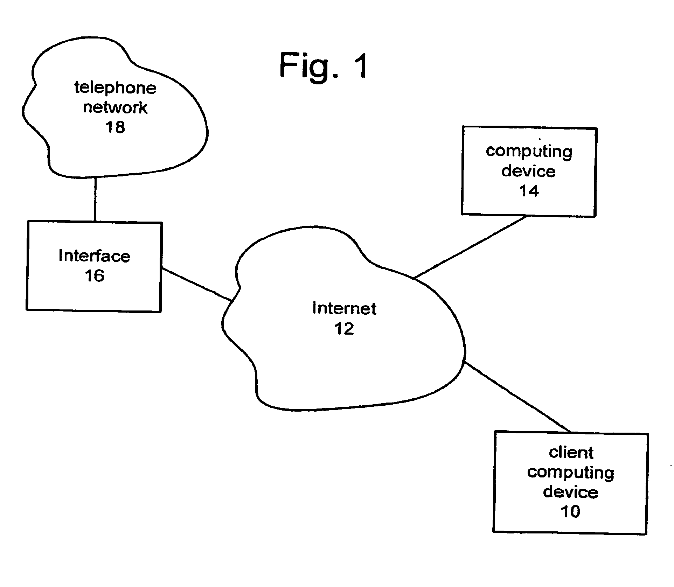

Figure 1 is a block diagram depicting one embodiment of a system that provides for communication (e.g., VOIP) over a network that can automate the initiating of telephone calls as described hereine. Figure 1 depicts client computing device 10 in communication with Internet 12. Client computing device 10 can be any suitable computing device including a personal computer, notebook computer, handheld device, mobile telephone, etc. Client computing device 10 includes software and/or hardware to allow communication over Internet 12. For example, client computing device may include a VOIP software application that communicates over a network interface.

Figure 1 also shows computing device 14 in communication with interface 16 via Internet 12 (or other means). Interface 16 is also in communication with telephone network 18 via a direct communication link, Internet 12, or another means. Computing device 14 can be any type of computing device that can communicate with other computing devices. Telephone network 18 includes the well known legacy telephone network and/or a cellular telephone network. Interface 16 includes hardware and software that provides an interface between the legacy telephone network 18 and the data network of Internet 12. For example, interface 16 can be one or more computers that receive VOIP communication via Internet 12 and transfer those communications to legacy telephone network 18, as well as transfer voice communication from telephone network 18 to VOIP communication over Internet 12. It is contemplated that a user of client computing device 10 will make a telephone call using VOIP technology to another user on computing device 14, or to a user of a conventional or wireless telephone on telephone network 18. In other embodiments, the user making the telephone call can be using a telephone with an adaptor rather than client computing device 10.

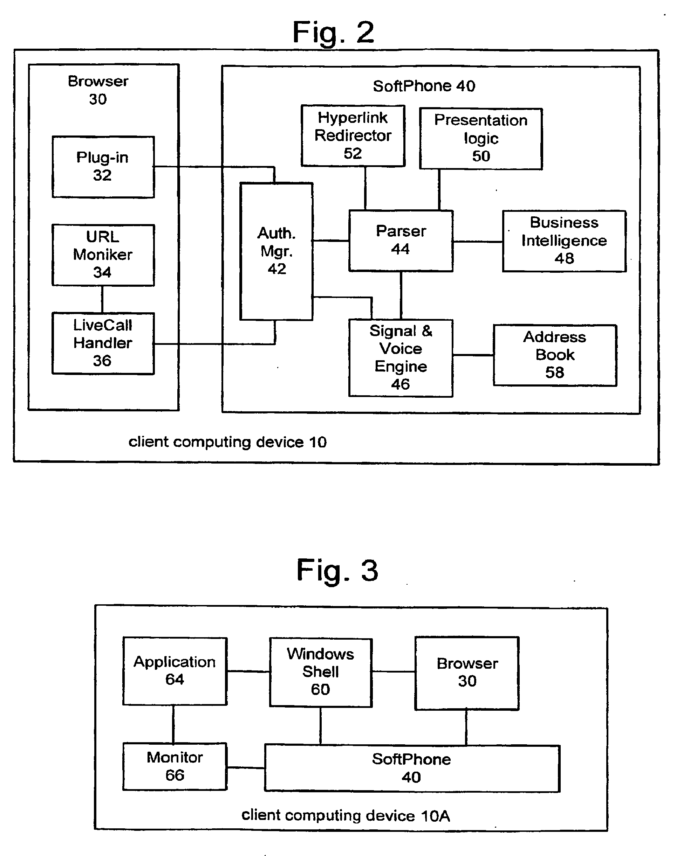

Figure 2 is a block diagram depicting various components residing on client computing device 10. In one embodiment, client computing device 10 includes browser 30 (e.g., Internet Explorer from Microsoft Corporation, or another browser) and SoftPhone 40. In one embodiment, SoftPhone 40 is a software application that can implement VOIP. In other embodiments, SoftPhone 40 will implement other communication protocols that can be used to establish a voice connection or other type of connection that includes a voice communication. SoftPhone 40 can be part of a communication application that includes instant messaging, email, file sharing and other services.

Browser 30 includes plug-in 32, URL Moniker 34 and LiveCall Handler 36. Plug-in 32 is a software module that is loaded by and running in the browser. When a web page is loaded, a browser calls a browser plug-in to perform a function. When a user hovers on a text string, browser 30 calls browser plug-in 32 to process the text string. URL Moniker 34 receives URLs that are in code implementing a user interface within browser 30 and looks up the appropriate protocol handler for these URLs. LiveCall Handler 36 is one example of a protocol handler. As discussed below, one aspect of some embodiments of the technology described herein is a new hyperlink. This hyperlink is referred to as a LiveCall hyperlink. LiveCall Handler 36 is the protocol handler for the LiveCall hyperlink. More details of the LiveCall Hyperlink will be discussed below.

SoftPhone 40 includes Authentication Manager 42, which is a software module that authenticates users prior to using SoftPhone 40. In some embodiments, Authentication Manager 42 also verifies that a user is authorized to perform the actions requested by the user. Figure 2 shows Authentication Manager 42 in communication with plug-in 32 and LiveCall Handler 36.

After a user is authenticated, Authentication Manager 42 will pass control to parser 44 or another module. Parser 44 is a software module that parses a URL into various components. Parser 44 will communicate these components to Signal and Voice Engine 46, Business Intelligence 48, Presentation Logic 50 and Hyperlink Redirector 52.

Signal and Voice Engine 46, which is also in communication with Authentication Manager 42, provides the engine for initiating and maintaining a VOIP telephone call. Signal and Voice Engine 46 is in communication with Address Book 58. In one embodiment, Address Book 58 stores contact information for various people associated with the user. Address Book 58 can be part of a personal information management application or a data store that is dedicated to SoftPhone 40.

Business Intelligence 48 is a data store which stores information about the use of SoftPhone 40 for Business Intelligence applications. Presentation Logic 50 provides a user interface for SoftPhone 40. Hyperlink Redirector 52 can be used to redirect either Presentation Logic 50 or browser 30 based on a command or information in a URL. In one embodiment, Hyperlink Redirector 52 is in communication with browser 30.

Figure 2 contemplates the environment where the content that includes one or more telephone numbers is used in code for a web page displayed in browser 30 and the user is using SoftPhone 40 to make a VOIP call via Internet 12 or other network. In another embodiment, the telephone numbers may be in content used within an application other than a browser. For example, a telephone number can be used in a word processing document, spreadsheet, or any other application. Figure 3 provides a block diagram of a system where inter-software module communication with SoftPhone 40 is via an API so that telephone numbers from applications (including a browser and software applications other than a browser) are used to trigger communication with SoftPhone 40. Figure 3 shows client computing device 10A including SoftPhone 40, browser 30, Windows Shell 60, Application 64, and Monitor 66. SoftPhone 40 and browser 30 include the components depicted in Figure 2. Windows Shell 60 is an interface for the operating system. In one embodiment, applications on client computing device 10A can make use of an Accessibility API (Application Program Interface), which is a COM-based technology that improves the way accessibility aids work with applications running on Microsoft Windows. It provides dynamic-link libraries that are incorporated into the operating system as well as COM-interface and application programming elements that provide reliable methods for exposing information about user interface elements. The Accessibility API is known in the art and is built into the Windows operating system. Application 64 can be any application that has a user interface which can display a hyperlink. Monitor 66 is software module that is in communication with Application 64 and SoftPhone 40 for implementing some of the features described herein.

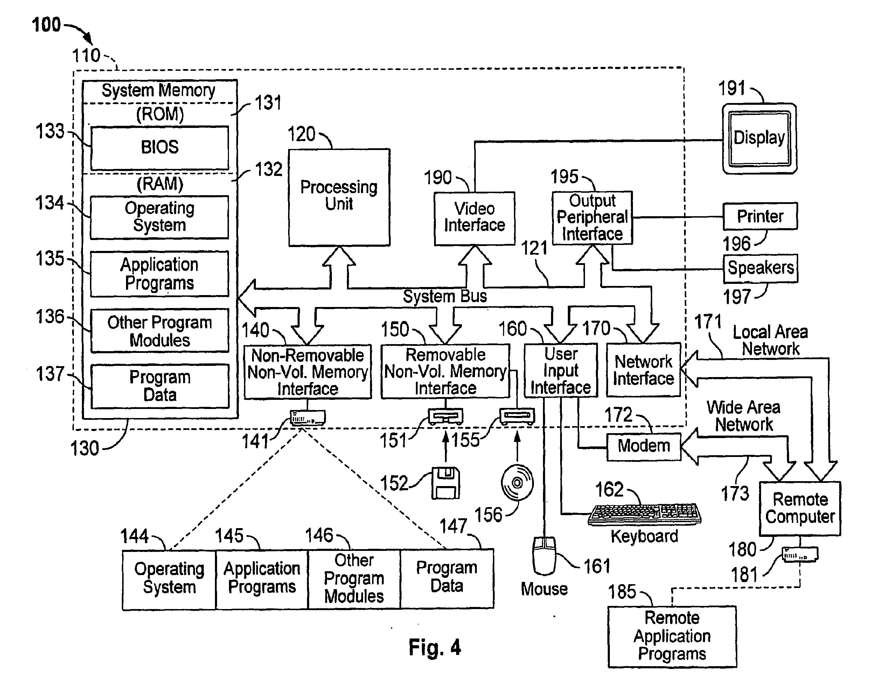

Fig. 4 illustrates one example of a suitable general computing environment 100 that may be used to implement the various components illustrated in Figures 1-3. For example, computing system 100 can be used to implement user client computing device 10, computing device 14, or interface 16. Computing system 100 is only one example of a suitable computing environment and is not intended to suggest any limitation as to the scope of use or functionality of the technology described herein. Neither should computing system 100 be interpreted as having any dependency or requirement relating to any one or combination of components illustrated in the exemplary operating environment 100.

The technologies described herein are operational with numerous general purpose or special purpose computing system environments or configurations. Examples of well known computing systems, environments, and/or configurations that may be suitable for use include, but are not limited to, personal computers, server computers, hand-held or laptop devices, personal digital assistants, telephones (wired, wireless, or cellular), multiprocessor systems, microprocessor-based systems, set top boxes, programmable consumer electronics, network PCs, minicomputers, mainframe computers, distributed computing environments that include any of the above systems or devices, and the like.

The system may be described in the general context of computer-executable instructions, such as program modules, being executed by a computer. Generally, program modules include routines, programs, objects, components, data structures, etc., that perform particular tasks or implement particular abstract data types. The system may also be implemented in distributed computing environments where tasks are performed by remote processing devices that are linked through a communications network. In a distributed computing environment, program modules may be located in both local and remote computer storage media including memory storage devices.

With reference to Fig. 4, an exemplary system includes a general purpose computing device in the form of computer 110. Components of computer 110 may include, but are not limited to, a processing unit 120 (which can include multiple processors), a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Fig. 4 illustrates operating system 134, application programs 135, other program modules 136, and program data 137.

The computer 110 may also include other removable/non-removable, volatile/nonvolatile computer storage media. By way of example only, Fig. 4 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/ nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 4, provide storage of computer readable instructions, data structures, program modules and other data to program the processor(s) to perform the methods described herein. In Fig. 4, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through a output peripheral interface 190.

Computer 110 may operate in a networked environment using logical connections to one or more remote computers, such as a remote computer 180. Remote computer 180 may be a personal computer, a server, a router, a network PC, a peer device or other common network node, and typically includes many or all of the elements described above relative to the computer 110, although only a memory storage device 181 has been illustrated in Fig. 4. The logical connections depicted in Fig. 4 include a local area network (LAN) 171 and a wide area network (WAN) 173, but may also include other networks. Such networking environments are commonplace in offices, enterprise-wide computer networks, intranets and the Internet.

When used in a LAN networking environment, computer 110 is connected to LAN 171 through a network interface or adapter 170. When used in a WAN networking environment, computer 110 typically includes a modem 172, network interface or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Fig. 4 illustrates remote application programs 185 as residing on memory device 181. It will be appreciated that the network connections shown are exemplary and other means of establishing a communications link between the computers may be used.

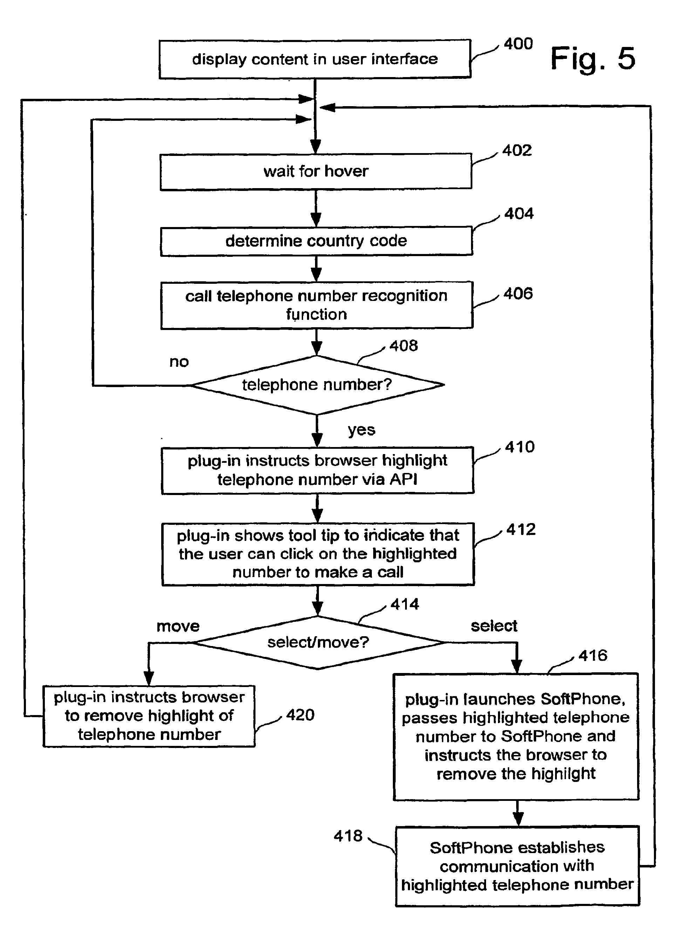

As described above, a feature of the technology described herein is the automating of a call in response to a user hovering over or selecting a telephone number within content of a user interface. Figure 5 provides one embodiment of a method for implementing this feature. In step 400 of Figure 5, content is displayed in the user interface. In one example, the content is a web page displayed in browser 30. In other embodiments, other content can be displayed in other applications. In step 402, the system will wait for a hover event. In one embodiment, the operating system for a client computing device 10 can generate a hover event when user hovers over content in the user interface. For example, if the user hovers over text in a browser, plug-in 32 will be notified that there is a hover event and the text being hovered over will be provided to plug-in 32. In one example implementation, browser 30 will track hovers and notify plug-in 32 at an appropriate OnMouseOver(). If there is not a hover event, then plug-in 32 will wait until there is a hover event. When the user does hover over text, then step 404 is performed. In some embodiment, to generate a hover event the use needs to hover directly over content, while in other embodiments a hover event can occur when a user hovers directly over or near (within a predetermined short distance of) the content.

In step 404, plug-in 32 determines the country code associated with the content. For example, plug-in 32 can look at the URL associated with the web page to see if it identifies a country code. Alternatively, plug-in 32 can do a reverse IP address look-up of a domain name. Different countries have different ranges of IP addresses. In another embodiment, browser language and coding type can indicate a country. Internet Explorer has an API to specify and read the language of a page. Some web pages will have an HTML code that indicates the language and country of origin. In some embodiments this information can be in an HTML header. In some embodiments, the country code will not be able to be determined.

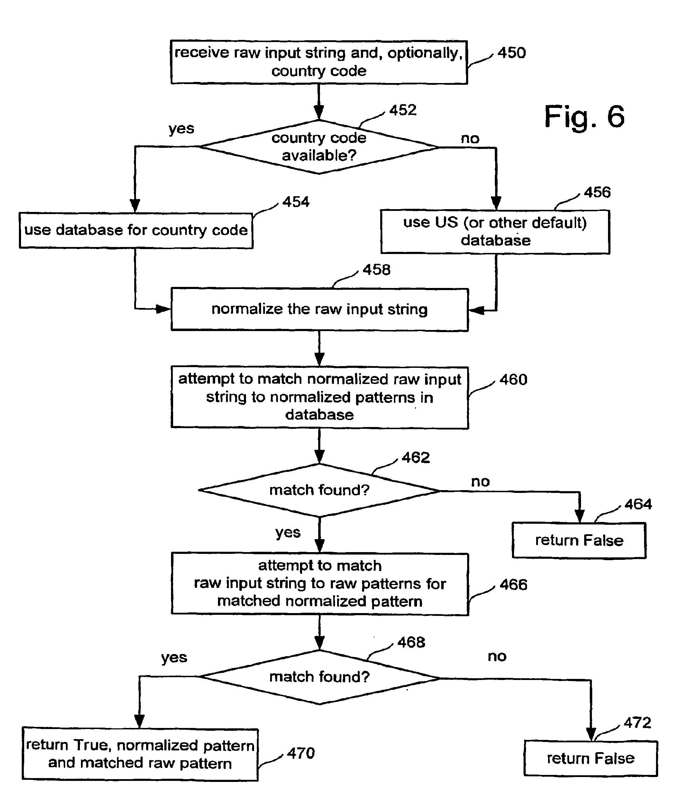

In step 406, plug-in 32 will execute a telephone number recognition function. The input to the telephone recognition function will include the raw input string that was hovered over and (optionally) the country code. The output of the telephone recognition function includes (1) a boolean decision whether the raw input string includes a telephone number, (2) a normalized pattern telephone number, and (3) a raw pattern telephone number. More details of the telephone recognition function will be described below with respect to Figure 6.

In step 408, if the text hovered over does not include a telephone number, then the process will loop back to step 402 and wait for another hover event. If the text hovered over does include a telephone number (step 408), then in step 410 plug-in 32 will instruct browser 30 to highlight the telephone number via an API. In step 412, plug-in 32 will cause a tool tip to be displayed. This tool tip will indicate that the user can click on the highlighted number to make a telephone call to that number.

At this point the user can do at least two actions: the user can move away from the highlighted number or the user can select the highlighted number by clicking on it (or by some other means for selection). If the user selects the highlighted number, then in step 416 plug-in 32 will launch SoftPhone 40, pass the highlighted telephone number to SoftPhone 40 and instruct browser 30 to remove the highlight. In step 418, SoftPhone 40 will establish communication with the highlighted telephone number. For example, Signal and Voice Engine 46 will create a voice connection using the appropriate protocol (e.g., VOIP) to the highlighted phone number using technology known in the art. If the user moved away from the highlighted number without selecting it (step 414), then in step 420 plug-in 32 will instruct browser 30 to remove the highlight of the telephone number and the process will loop back to step 402 to test whether another hover event has occurred.

Figure 6 is a flowchart describing one embodiment of the telephone number recognition function (see step 406 of Figure 5). This function attempts to match the input pattern with one of a set of stored patterns. Each country has its popular formats of phone numbers. To formulate a pattern, the country code is denoted as "C", a digit is "D", an alphanumeric (digit and letter) is "A", and a delimiter is "?". A delimiter is used to make the phone number more human readable. For instance, "(", ")", "-", ".", "/", and space are popular delimiters. For example, a telephone number 1-800-FOR-PIZZA can be formulated as "C?D3?A3?A4". This pattern has an optional country code followed by three-digit area code, followed by 7 digit phone number. The country code normally is optional.

A phone number to match can be normalized, i.e. all the delimiters are removed. This will simplify pattern match. However, the delimiters provide a hint on area code because an area code is written only in digits, not letters.

There are two phone number patterns: raw pattern and normalized pattern. A raw pattern is one that can be used directly to match a raw phone number. A normalized pattern is one that can be used to match a normalized phone number. For instance, in United States, the format can be one of the following:

| Format | Raw Pattern | Normalized Pattern |
|---|---|---|
| +14257069606 | +CD3A7 | +CD3A7 |
| 1 (425) 7069606 | C??D3??A7 | CD3A7 |
| 1 (425) 707-9606 | C??D3??A3?A4 | CD3A7 |
| 1-425-706-9606 | C?D3?A3?A4 | CD3A7 |
| 1-425-7069606 | C7D37A7 | CD3A7 |
| 1.425.706.9606 | C?D3?A3?A4 | CD3A7 |
| 1.425.7069606 | C?D3?A7 | CD3A7 |

For some countries, the area code and phone number do not always have the same length. In this case, the pattern will be written as a range. For instance, "CDI-4A6-9" denotes that the area code can have 1 digit to 4 digits, and the local phone number can have 6 digits/letters to 9 digits/letters.

In step 450 of Figure 6, the raw input string is received. In some embodiments, the country code is also received. If a country code was received (step 452), then a database for that particular country code is accessed and used. If the country code was not available, the United States database (or other default database) is used in step 456. In step 458, the raw input string is normalized.

In step 460, the function attempts to match the normalized raw input to a set of normalized patterns in the chosen database. If a match is found (step 462), an attempt is made to match the raw input string to any of the raw patterns associated with that matched normalized pattern in step 466. If no match was found in, then the function returns false in step 464, which means no telephone number was found in the input string.

If the attempt to match the raw input string in step 466 finds a match (step 468), then the process returns true in step 470, which indicates that a telephone number was found in the input string. The normalized pattern and the matched raw pattern are both also returned in step 470. If no match was found (step 468), then the process returns false in step 472, which indicates that there was no telephone number found in the input string.

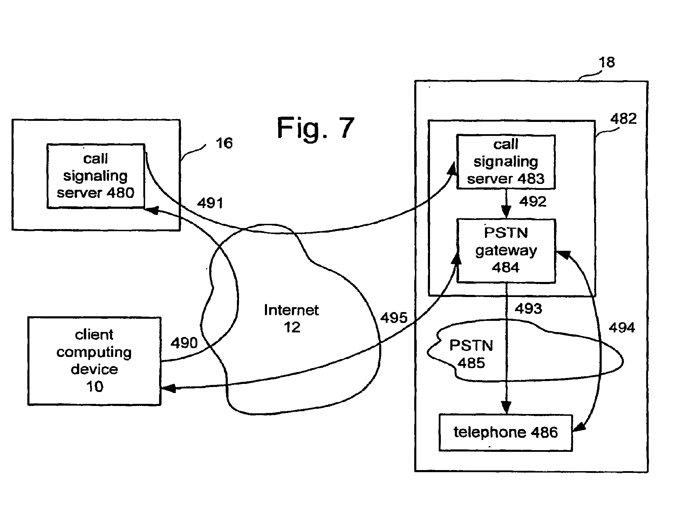

Figure 7 is a block diagram depicting one example of implementing a PC-to-Phone call by a LiveCall hyperlink (e.g.,LiveCall:+14257069606), which can be implemented as part of step 418 of Fig. 5. Figure 7 depicts Client computing device 10 in communication (via Internet 12) with call signaling server 481 of interface 16, which itself is in communication with a call signaling server 483 of a Telco provider 482 (via Internet 12). Call signaling server 483 is in communication with Public Switched Telephone Network ("PSTN") gateway 484 of Telco provider 482. PSTN gateway 484 is in communication with client computing device 10 via Internet 12 and with telephone 486 via PSTN 485.

SoftPhone 40, in client computing device 10, sends a call signaling message (including the telephone number) to the call signaling server 481 (see 490). Call signaling server 481 authenticates the user and routes the call signaling message to the appropriate telco provider 482 (see 491). When the call signaling server 483 at the telco provider 482 receives the call signaling message, it authorizes the call and terminates the call to the appropriate PSTN Gateway 484 (see 492). PSTN Gateway 484 routes the call to the destination telephone line (see 493). When a user picks up the telephone 486 at the destination telephone line, the voice stream will be established among SoftPhone 40 (in client device 10), PSTN gateway 484, and PSTN telephone 486 (see 494 and 495).

Telephone 386 can be PSTN telephone or mobile/cellular phone. In the case of a mobile/cellular phone, PSTN gateway, PSTN network, and PSTN telephone can be replaced with mobile gateway, mobile network, and mobile phone, respectively. In another embodiment, the PSTN telephone can be replaced with mobile gateway, mobile network, and mobile phone. In one implementation, SIP (Session Initiation Protocol) is used for call signaling.

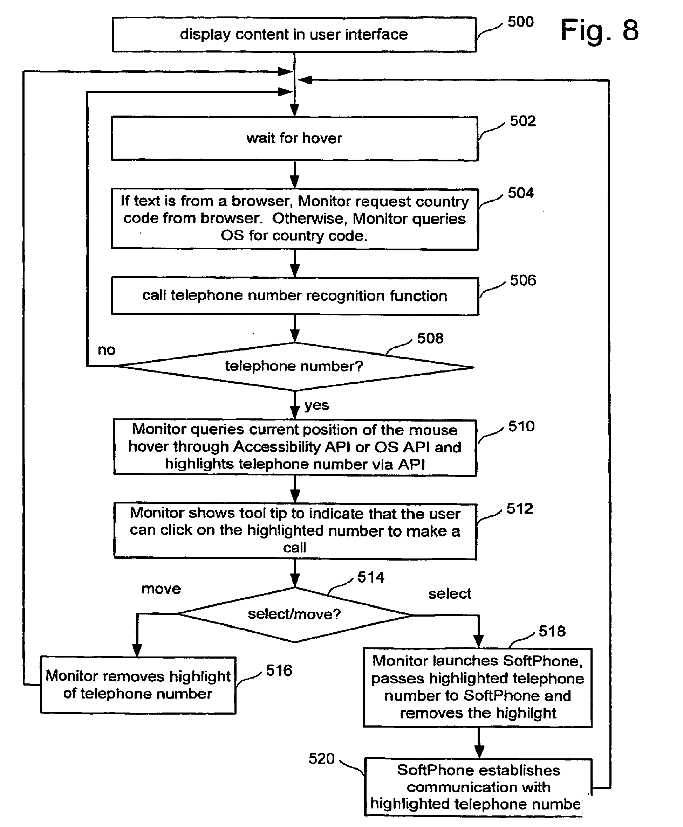

Figure 8 describes an alternative embodiment which performs the hover to call process for an application other than a browser. The process of Fig. 8 can also be used for a browser. The application being monitored will make use of the Accessibility API. This embodiment is associated with the environment of Figure 3, which includes monitor 66 to process the string provided by the Accessibility API. Note in some embodiments, monitor 66 can be its own process as depicted in Figure 3, or it can be part of application 64. In some embodiments, monitor 66 will also communicate directly with Windows Shell 60. In step 500 of Fig. 8, the relevant content will be displayed in the user interface of application 64. In step 502, the system will wait for a hover event. When there is a hover event over text, monitor 66 will receive the hovered over text and step 504 will be performed. Note that with the Accessibility API, monitor 66 will receive a word. If a word cannot be found, monitor 66 can ask for a whole sentence, a whole line, or number of lines. If the text is from a browser, monitor 66 will request the country code from the browser in step 504. Otherwise, monitor 66 queries the operating system for a country code. In some embodiments, the country code will not be available. In step 506, monitor 66 executes the telephone number recognition function and passes it the text that was hovered over from application 64. If there is no telephone number in that text (step 508), the process loops back to step 502 and waits for another hover event.

If there was a telephone number in that text (step 508), then in step 510 monitor 66 queries for the current position of the mouse hover through the Accessibility API (or through another API) and instructs the operating system (via an API) to highlight the telephone number. In an alternative embodiment, monitor 66 can communicate directly to application 64 and tell application 64 to highlight the text. In step 512, monitor 66 (via the API) will show a tool tip to indicate that the user can click on the highlighted number to initiate a telephone call. If the user moves away from the highlighted text, monitor 66 will remove the highlight of the telephone number and the process will loop back to step 502. If the user selects the highlighted text by clicking or other means for selection, monitor 66 will launch SoftPhone 40 (if it is not already launched), pass the highlighted telephone number to SoftPhone 40, and remove the highlight. In step 520, SoftPhone 40 will establish a voice communication with the highlighted telephone number. After step 520, the process will loop back to step 502 and wait for another hover event.

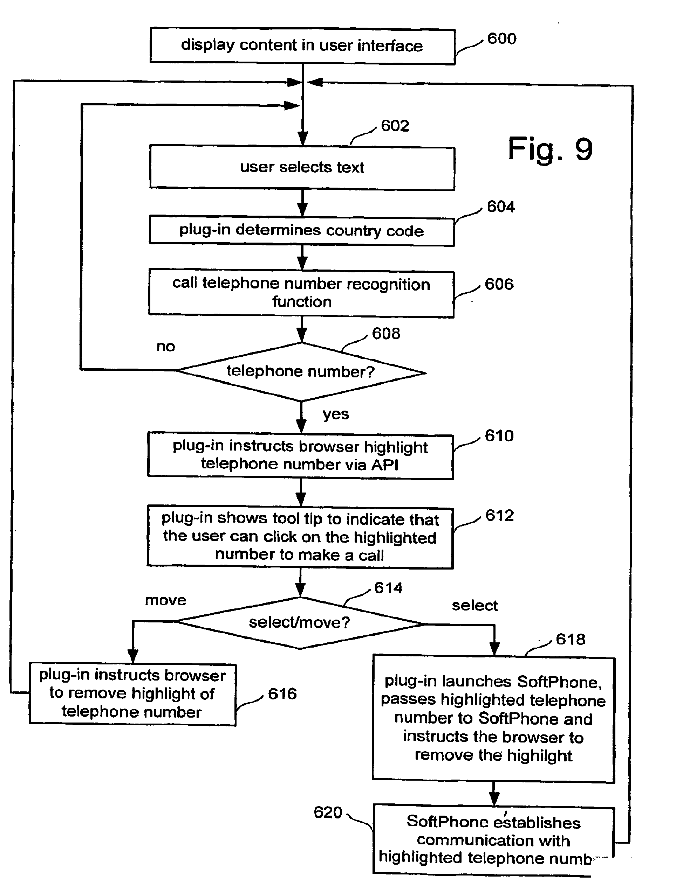

The above discussion pertains to automating a telephone call in response to a user hovering over content. In another alternative, a telephone call can be automated in response to a user selecting content. Figure 9 is a flowchart describing one such embodiment. In step 600, content is displayed in the user interface, as described above. In step 602, the user selects text and this text is provided to plug-in 32. In one embodiment, the user can select text by highlighting the text using a mouse or other pointing device. In step 604, plug-in 32 determines the country code, as described above. In step 606, plug-in 32 calls the telephone recognition function. If a telephone number was not found (step 608), the process loops back to step 602 and waits for the user to select more text. If a telephone number is found (step 608), plug-in 32 instructs browser 30 to highlight the telephone number via an API in step 610. In some embodiments, the telephone number is not highlighted. In step 612, plug-in 32 causes a tool tip to be displayed. This tool tip indicates that a user can click on the telephone number to make a telephone call to that number. If the user moves away from the telephone number (step 614), then in step 616 plug-in 32 will instruct browser 30 to remove the highlight of the telephone number, the process will loop to step 602 and wait for the user to select text. If the user selects (step 614) the telephone number by clicking or otherwise selecting, then in step 618 plug-in 32 will launch SoftPhone 40 (if necessary), pass the highlighted telephone number to SoftPhone 40 and instruct browser 32 to remove the highlight. In step 620, SoftPhone 40 will establish voice communication with the highlighted telephone number. After step 620, the process will loop back and wait for the user to select text again in step 602.

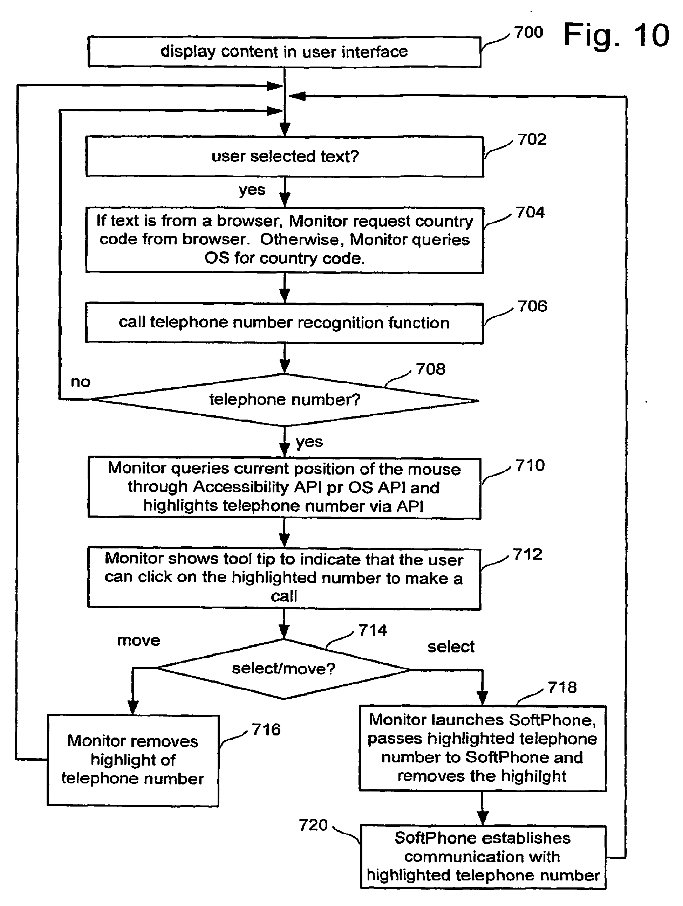

The discussion with respect to Figure 9 contemplates the selected content being in a browser. Figure 10 describes a process for automating a telephone call in response to a user selecting text in different applications, including applications that are and are not browsers (see environment of Figure 3). In step 700, contents is displayed in the user interface. In step 702, the user selects text. If the text is selected from a browser, monitor 66 will request a country code from the browser. If the text is from an application other than browser, monitor 66 will query the operating system for the country code. In some cases the country code will not be available. At step 706, monitor 66 calls the telephone recognition function. If no telephone number was found (step 708), then the process loops back and waits for the next text to be selected in step 702. If a telephone number was found (step 708), then monitor 66 queries the current position of the mouse and highlights the telephone number via the Accessibility API or another API. In step 712, monitor 66 causes a tool tip to be displayed. This tool tip indicates to the user that user can click on the highlighted number to make a call. If the user moves away from the highlight without selecting (step 714), then monitor 66 removes the highlight of the telephone number in step 716 and the process loops back to step 702 to wait for the next user selection. If the user does select the highlighted text (step 714), then in step 718 monitor 66 launches SoftPhone 40, passes the highlighted telephone number to SoftPhone 40 and removes the highlight from the user interface of application 64. In step 720, SoftPhone 40 establishes communication with the highlighted telephone number. After step 720, the process waits for the user to select text at step 702.

Note that the hover-to-call and the select-to-call technology described above are both performed without editing the code for the web page or modifying the web page. Neither process slows down the rendering of the web page.

Another set of processes can automate a call by changing the appearances of the content prior to a user hover. Then, in response to a user hover a telephone call can be initiated.

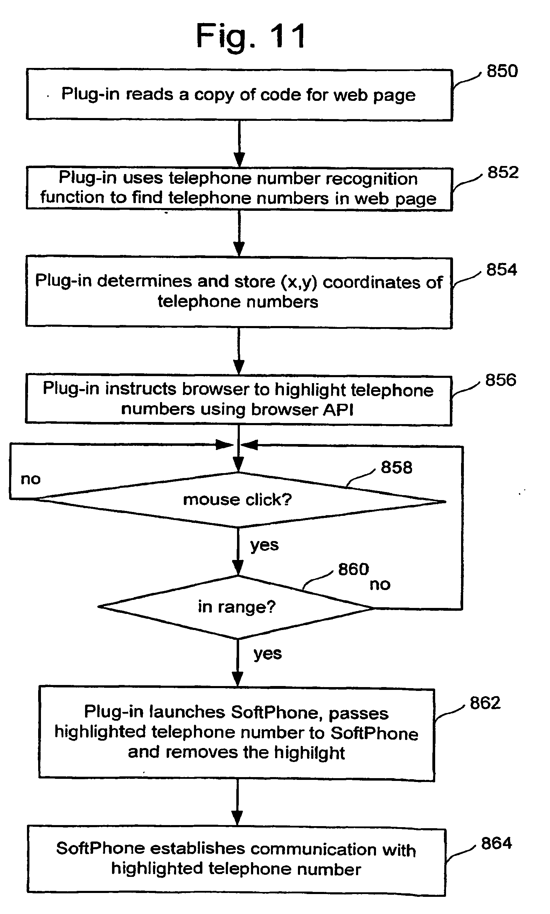

Figure 11 is a flowchart describing another embodiment of automating a call in response to a user hovering over a telephone number within content of a user interface. In step 550, plug-in 32 reads a copy of the entire code for a web page. In step 552, plug-in 32 uses the telephone recognition function of Figure 6 to find telephone numbers in the code. In step 554, plug-in 32 determines and stores the coordinates (e.g. x, y coordinates) of the locations of where the telephone numbers are located in the web page. In one embodiment, coordinates stored include the top left hand corner and bottom right hand corner of the telephone numbers to create a range in the user interface where a telephone number is located. In step 556, plug-in 32 instructs browser 30 to highlight the telephone numbers using an API for the browser. In step 558, the system waits for a mouse click. When there is a mouse click, the system determines whether the mouse click is within one of the ranges for the telephone numbers. It is contemplated that a web page may include multiple telephone numbers. If the mouse click identified in step 558 is in any of the ranges in step 560, then plug-in 32 will launch SoftPhone 40, pass the highlighted telephone number to SoftPhone 40, and remove the highlight from browser 30. In step 564, SoftPhone 40 will establish a voice communication with the highlighted telephone number.

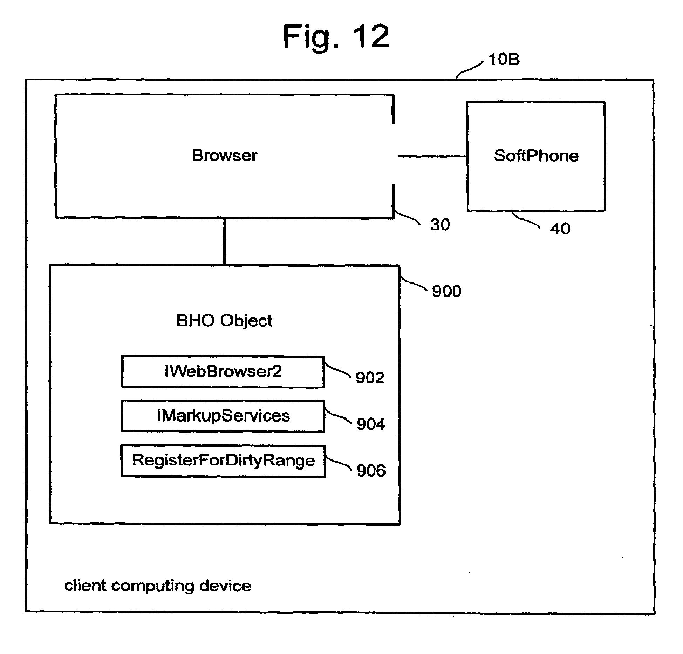

Figures 12-17 disclose a set of embodiments that use hyperlinks to provide the user with the ability to initiate a telephone call in response to hovering over a telephone number. Figure 12 shows browser 30 in communication with SoftPhone 40 and Browser Helper Object (BHO) 900. Browser Helper Objects are in-process Component Object Model (COM) components and can be applied to allow customization of the Internet Explorer browser to create a specialized version of the browser. A BHO can be used to detect the browser's typical events or install hooks to monitor messages and actions in Internet Explorer.

When a user loads a new page into a browser, such as Internet Explorer, the code for that web page is loaded into a data structure (e.g., IMarkupContainer Interface) for the browser. From that data structure, the web page is rendered. The embodiment of Figure 12 uses BHO 900 to access the data structure after the content has been loaded into the data structure, but before it has been rendered, in order to find telephone numbers in the content and add LiveCall hyperlinks (discussed below) for the telephone numbers.

When Internet Explorer is launched it checks the Windows registry to determine whether there are any BHOs. When a user installs SoftPhone 40, BHO object 900 will also be installed on the user's hard disk and the registry will be changed to list the BHO object. In addition, the LiveCall hyperlink will be registered for Internet Explorer.

BHO 900 of Fig, 12 includes at least three services: IWebBrowser2 902, IMarkupServices 904, and RegisterForDirtyRange 906. IWebBrowser2 902 throws events, including Dispid_DocumentComplete when text is done downloading and Dispid_DownloadComplete when everything for a particular web page (text and images) has completed downloading. IMarkupServices 904 is used to allow access to RegisterForDirtyRange 906 when one of the two above-identified events thrown by lWebBrowser2 902 occurs. RegisterForDirtyRange indicates the new version of the content and whether there is a change in the content. The system then uses IMarkupContainer, which points to the section that has been changed, in order to access the new content in the data structure for the browser. They system will review the new content to identify any telephone numbers in the new content. If telephone numbers are found, the data structure mentioned above is edited to add LiveCall hyperlinks for each of the telephone numbers.

The LiveCall hyperlink allows an application developer to specify an extensible address for placing a VOIP call from a web page or application. The types of calls include: PC-to-Phone call and a PC-to-PC call. The PC-to-Phone call originates from a PC and terminates at a telephone, including a fixed line telephone or a mobile phone. The PC-to-PC call includes voice, video and optional text chat. This call originates from a PC and terminates at a PC. The types of target addresses in a LiveCall hyperlink include a telephone number, a contact (e.g., a contact in an address book), a computer name (e.g., JohnDoe PC) or an IP address (e.g., 124.38.110.25).

The syntax for a LiveCall hyperlink is: LiveCall:<Parameters>. To make a call to a telephone number, the following parameters can be used:
- Phone: a phone number that can be local, domestic long distance, or international number
- Local: a local phone number
- National: a domestic long distance number
- Direct: a direct dialing, i.e. raw digits
- Contact: a contact in presence or address book

Some examples include:
(1) LiveCall:+14257069606; Place a PC-to-Phone call using the telephone number +14257069606.
(2) LiveCall:Phone=7069606; Place a PC-to-Phone call using the telephone number 7069606, which can be a local phone number, domestic phone number, or an international phone number. SoftPhone 40 will parse this telephone number based on its location settings.
(3) LiveCall:Phone=PIZZAUSA; Place a PC-to-Phone call using the telephone number 74992872 (PIZZAUSA).
(4) LiveCall:Local=7069606; Place a PC-to-Phone call using the local phone number 7069606.
(5) LiveCall:National=14257069606; Place a PC-to-Phone call using a domestic long-distance telephone number 14257069606.
(6) LiveCall:Direct=911; Place a PC-to-Phone call using the digits as it is.
(7) LiveCall:Contact=JohnDoe@hotmail.com; Place a PC-to-Phone call using the default phone number in the contact information (or address book) for John Doe.

To make a call to a computer, the following parameters can be used: (1) Online: an online presence ID; and (2) Host: a computer name or an IP address. Some examples include:
(1) LiveCall:Online=JohnDoe@hotmail.com; Place a PC-to-PC call using the online presence ID.
(2) LiveCall:Host=JohnDoePC; Place a PC-to-PC call using the computer name of the destination machine.
(3) LiveCall:Host=124.38.110.25; Place a PC-to-PC call using the IP address of the destination machine.

The source parameter "Src" in a LiveCall hyperlink indicates the source context where this LiveCall hyperlink is clicked or executed. This information is useful for business intelligence. The source parameter can be combined with other parameters. Parameters in a LiveCall hyperlink are concatenated by the '&' sign. Consider the following examples:
(1) Livecall:Phone=7069606&Src=Messenger/Contact/Home; Place a PC-to-Phone call using the home phone number listed in the contacts of Messenger (Instant Messaging).
(2) LiveCall:Online=JohnDoe@hotmail.com&Src=Messenger/Buddy; Place a PC-to-PC call using the online presence ID listed in the buddy list of Messenger.
(3) Livecall:?Signup&Src=Hotmail/Ads; Go to the signup web site to start signup process, where this hyperlink is listed in the ads section of Hotmail (web based email service).

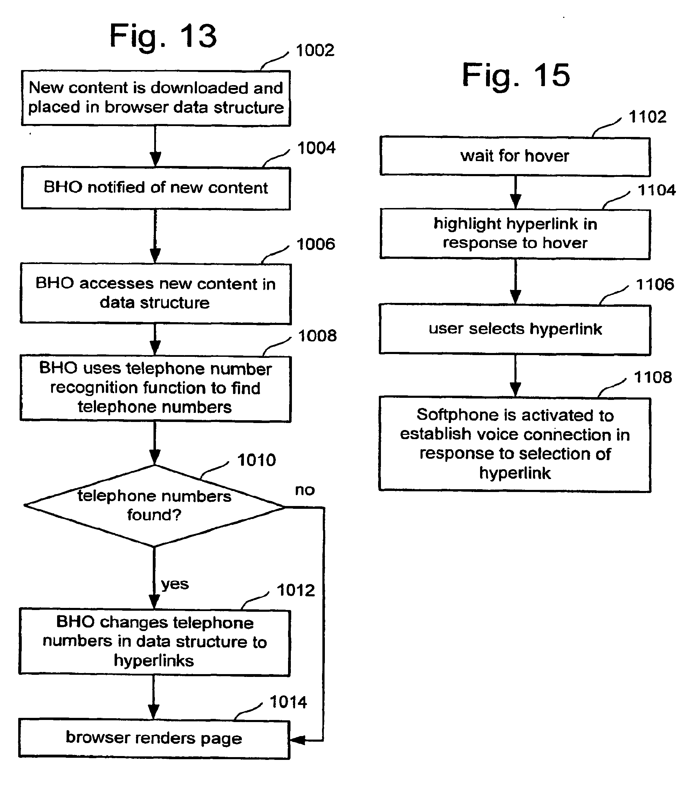

Figure 13 is a flow chart describing one embodiment for adding LiveCall hyperlinks. In step 1002, new content is downloaded. The new content can be an entire new web page or a portion of a web page, which generates one of the events discussed above. The data is loaded into the data structure mentioned above. BHO 900 is notified of the new content from IWebBrowser2 902 throwing Dispid_DocumentComplete and/or Dispid_DownloadComplete in step 1004. The RegisterForDirtyRange service 906 will provide a pointer to the new content. BHO 900 will access words, sentences, text between punctuation, text between spaces, or other groupings content in step 1006 and call the telephone number recognition function (see Fig. 6) a number of times in order to find any telephone numbers in step 1008. If there are no telephone numbers found (step 1010), then the web page is then rendered as originally intended in step 1014. If telephone numbers are found (step 10 10), then the data structure is changed in order to remove each of the telephone numbers and replace them with a LiveCall hyperlink in step 1012. Subsequently, the page is rendered in step 1014. Note that the LiveCall hyperlink added may include a source (Src) parameter to identify the content that the LiveCall hyperlink was added to.

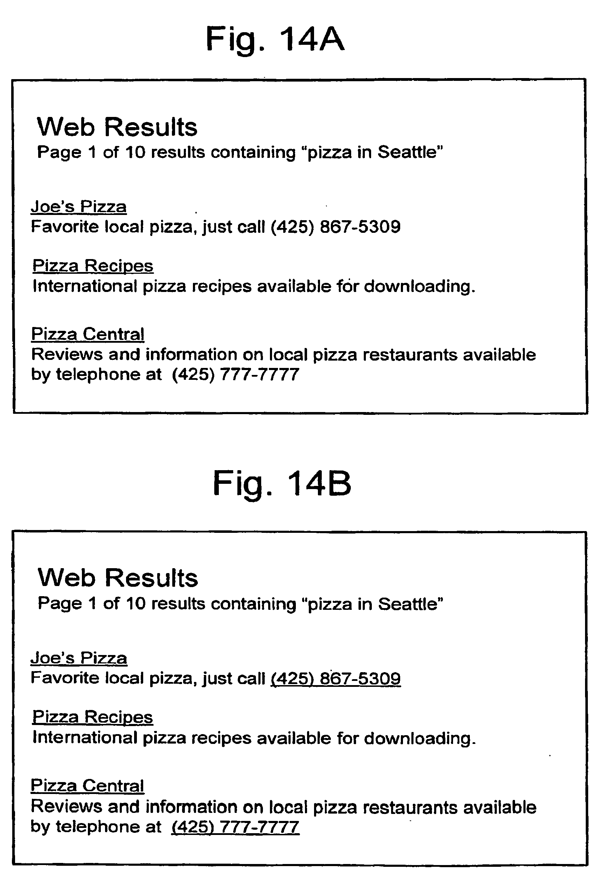

Figure 14A depicts a portion of a web page (e.g., search results) that includes two telephone numbers. Figure 14B depicts that same portion of a web page as rendered after the process of Fig. 13 has been performed to add LiveCall hyperlinks. Notice that the two telephone numbers that appear in Fig. 14B are underlined. When a user hovers over the underlined telephone numbers, they will change color. In other embodiment, the hyperlink will not change the appearance of the telephone number, and when the user hovers over the telephone number the number will then be underlined and/or have its color changed.

Figure 15 is a flow chart that describes one embodiment of a process for initiating a telephone call in response to a user hovering over a telephone number. After a web page is rendered by the browser according to the process of Fig. 13, the system waits for a hover event in step 1102. When the user hovers over a hyperlink, the browser will highlight it in step 1104. In one embodiment, the hyperlink can change colors, add an underline, or both. If the user selects the hyperlink (step 1106), then the browser checks to see if the hyperlink is registered with the browser. If it is registered, the registration tells the browser which program to call. The browser will then call SoftPhone 40 (step 1108) and pass it the contents of the hyperlink, which in this case includes the telephone number.

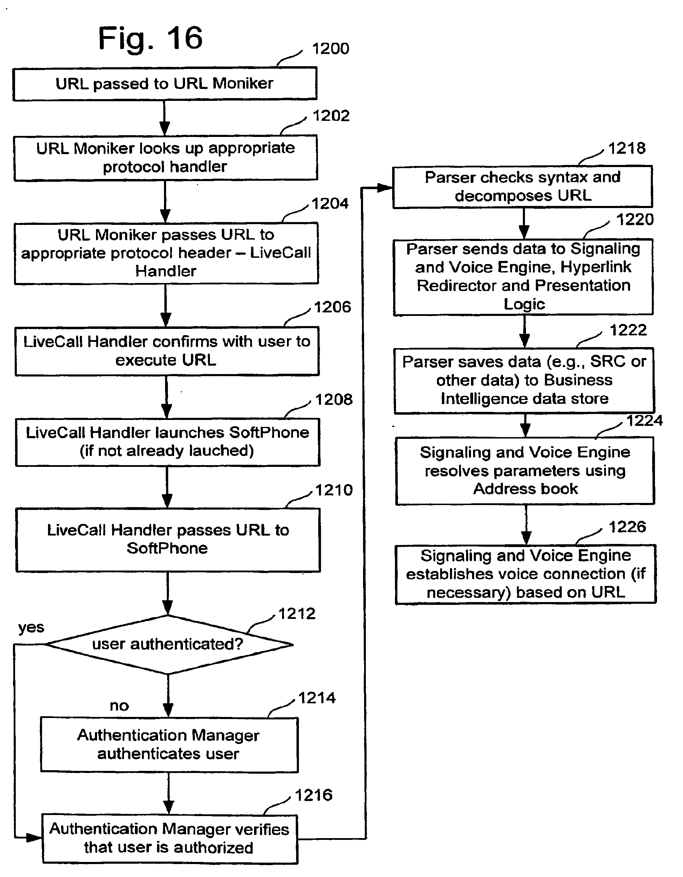

Figure 16 is a flowchart describing one embodiment of a process performed in response to a user clicking on or otherwise selecting a LiveCall hyperlink in a web page, document, file or other user interface (see step 1108 of Fig. 15). A hyperlink is typically expresses as a Uniform Resource Locator (URL). In step 1200; the URL of the selected LiveCall hyperlink is passed to URL Moniker 34 (see Fig. 2). In step 1202, URL Moniker 34 looks up the appropriate protocol handler based on the header information in the URL (e.g., "LiveCall:"). In step 1204, the URL Moniker 34 passes the URL to the appropriate protocol handler. In the case of the LiveCall hyperlink, the URL is passed to LiveCall Handler 36. In step 306, LiveCall handler 36 confirms with the user that the user wants to execute the URL. In some embodiments, step 306 is optional and can be skipped. In step 1208, LiveCall Handler 36 launches SoftPhone 40. In some embodiments, if SoftPhone 40 is already running, then it does not need to be launched again. SoftPhone 40 includes a graphical user interface that comprises a keypad for dialing, a telephone number display area, an area that displays call history, an area that displays service provider information, an area that displays telephone call information, and (optionally) an area to display web or network content.

In step 1210, LiveCall Handler 36 will pass the URL to SoftPhone 40. In one embodiment, the URL is initially passed to Authentication Manager 42. If the user is not authenticated (step 1212), then Authentication Manager 42 will authenticate the user. In one embodiment, this will include providing a log-in screen where the user can provide a username and password. If the user does not properly authenticate, the process of Figure 16 will terminate. After authenticating the user, Authentication Manager 42 will verify whether the user is authorized to perform the function identified in the hyperlink (step 1216). Note that if the user was previously authenticated (see step 1212), then step 1214 will be skipped and the process will proceed to step 316 to determine whether the user is authorized.

In step 1218, the URL representing the hyperlink will be passed to parser 44 which will check the syntax of the URL and decompose the URL into various components. In step 1220, parser 44 will send the appropriate components to Signaling and Voice Engine 46, Business Presentation Logic 50 and Hyperlink Redirector 52. In one embodiment, any commands (e.g., account maintenance) and callee will be passed to Signal and Voice Engine 46, a command will be passed to Presentation Logic 50, and the command and hyperlink will be passed to Hyperlink Redirector 52. In step 1222, parser 44 will save the data (e.g. all of the components, including an indication of the source) to Business Intelligence data store 48. In step 1224, Signaling and Voice Engine 46 will resolve any parameters using the Address Book 58. For example, if a target is identified by a contact or computer name, Address Book 58 will be used to translate that contact to a telephone number or translate the computer name to a IP address. In step 1226, Signaling and Voice Engine 46 will establish a voice connection with the target of the URL.

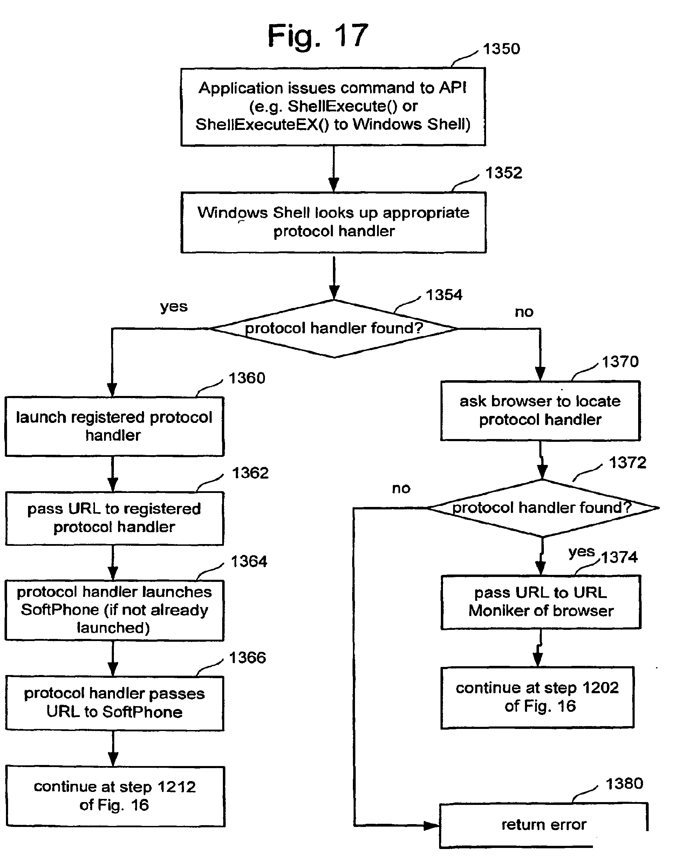

Figure 17 is a flowchart describing one embodiment of a process performed in response to a LiveCall hyperlink being selected when operating within the embodiment of Figure 3. That is, a hyperlink is in an application that uses an API. In step 1350, application 64 issues a command to the API. For example, a ShellExecute() or ShellExecuteEX() is issued to Window Shell 60. In step 1352, Windows Shell 60 will look up the appropriate protocol handler. If the protocol handler is found (step 1354), then Windows Shell 60 will launch the Protocol Handler in step 1360. For example, LiveCall Handler 36 can be launched. The Protocol Handler can exist separate from browser 30 or as is part of Browser 30.

Prior to operation, a LiveCall protocol handler needs to be registered. Two implementations are possible for registering a protocol handler. One is to register the protocol handler with Windows Shell. The other is to register the protocol handler with the browser. One advantage of registering the protocol handler with the browser is that the protocol handler can perform a sanity check to insure that the user has a chance to confirm the execution of the URL before the application is actually launched. This may be important to protect a user from drive-by executions of the URL while the user is visiting a web site.

In step 1362, the URL is passed to the protocol handler. In step 1364, the protocol handler launches SoftPhone 40, if not already launched. In step 1366, the protocol handler passes the URL to SoftPhone 40. After step 366 the process will continue at step 1212 of Figure 16.

If the Windows Shell 68 did not find an appropriate protocol handler (step 1354), then Windows Shell 60 will ask browser 30 to locate the appropriate protocol handler in step 1370. If browser 30 is able to find the appropriate protocol handler, then it will pass the URL to URL Moniker 34 in step 1374. In step 1376, that process will continue in step 1202 of Figure 16. If no appropriate protocol handler was found in step 1372, an error is returned to step 1380.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. It is intended that the scope of the invention be defined by the claims appended hereto.

## Claims

1. A method for initiating communication, comprising:
waiting for a hover event;
generating a hover event when a user hovers over or near content;
determining (406, 506, 606, 706) whether said content is an indication of a target in response to the hover event;
visually identifying (410, 510, 610, 710) said indication of said target in response to said determining;
receiving a selection (414, 514, 614, 714) of said indication of said target; and
establishing (418, 520, 620, 720) a voice connection using said indication of said target in response to said receiving said selection of said indication of said target.

2. A method according to claim 1, wherein:
said indication of said target is a telephone number;
said identifying includes highlighting (410, 510, 610, 710) said telephone number;
said receiving a selection includes a user clicking (414, 514, 614, 714) on said highlighted telephone number in a browser using a pointing device;
said establishing a voice connection includes providing said telephone number to a VOIP application (416, 518, 618, 718) and using said VOIP application to make a phone call to said telephone number; and
said steps of determining and identifying are performed without modifying code for said content.

3. A method according to claim 1, wherein said determining whether content is an indication of a target comprises:
receiving text; and
automatically determining (406, 506, 606, 706) whether said text includes a properly formatted telephone number; or
receiving text;
determining a country code (452);
identifying a database corresponding to said determined country code (454); and
determining whether said text includes a properly formatted telephone number using said database (458,460,462,466,468).

4. A method according to claim 1, wherein said determining whether content is an indication of a target comprises:
receiving data;
normalizing said data (458);
matching (460) said normalized data to a particular normalized pattern of a set of normalized patterns each associated with one or more raw patterns;
comparing (466) said received data to raw patterns associated with said particular normalized pattern; and
matching (466) said received data to one of said raw patterns associated with said particular normalized pattern.

5. A method according to claim 1, wherein:
said determining whether content is an indication of a target includes receiving data being hovered over for a browser, determining a country code, providing said data and said country code to a telephone number recognition function, instructing said browser to highlight said data in said browser, and providing a tool tip to indicate that a user can click on said highlighted data; and
said automatically establishing said voice connection includes instructing a communication application to make a VOIP telephone call.

6. A method according to claim 1, wherein:
said indication of said target is identified on a web page in a browser without editing source code, or is identified within an interface of an application that is not a browser.

7. A method according to claim 1, wherein said determining whether content is an indication of a target comprises:
receiving text from an application;
requesting a country code (450) from an operating system;
identifying (454) a database corresponding to said determined country code;
determining whether said text includes a properly formatted telephone number using said database (458,460,462,466,468); and
determining a current position associated with said user hovering.

8. A method according to claim 1, wherein:
said determining whether content is an indication of a target comprises:
receiving data,
determining a country code (450),
identifying a database corresponding to said determined country code (454),
normalizing said data (458),
matching said normalized data to a particular normalized pattern of a set of normalized patterns each associated with one or more raw patterns (460),
comparing said received data to a raw patterns associated with said particular normalized pattern (466), and
matching said received data to one of said raw patterns associated with said particular normalized pattern (466); and
said automatically establishing a voice connection includes instructing a VOIP communication application to make a telephone call using said one of said raw patterns associated with said particular normalized pattern.

9. A computing device, comprising one or more processor readable storage devices having code embodied on said processor readable storage devices, said code for programming a processing unit (120) to perform a method comprising:
waiting for a hover event;
generating a hover event when a user hovers over or near content
determining (406, 506, 606, 706, 852, 1008) whether content is an indication of a target in response to the hover event;
visually identifying (410, 510, 610, 710, 1104) said indication of said target within displayed content;
receiving a selection (414, 514, 614, 714, 1106) of said indication of said target; and
establishing a voice connection (418, 520, 620, 720, 1108) using said indication of said target in response to said receiving said selection of said indication of said target.

10. A computing device of claim 9 , wherein said determining whether content is an indication of a target includes:
normalizing (458) said content, matching (460) said normalized content to a normalized pattern, and matching (466) said content to a raw pattern associated with said normalized pattern;
determining whether a country code is available (450); and
identifying a database corresponding to said country code (454), said normalized pattern and said raw pattern are from said database corresponding to said country code.

11. A computing device of claim 9 , wherein said determining whether content is an indication of a target includes normalizing (458) said content, matching (460) said normalized content to a normalized pattern, and matching (466) said content to a raw pattern associated with said normalized pattern; and wherein:
said indication of said target is a telephone number;
said content includes a portion of a web site;
said establishing said voice connection is performed using a VOIP application; and
said determining is performed at least partially by making use of a BHO.

12. A computing device of claim 9 wherein said determining whether content is an indication of a target includes normalizing (458) said content, matching (460) said normalized content to a normalized pattern, and matching (466) said content to a raw pattern associated with said normalized pattern; and wherein:
said indication of said target is a telephone number;
said method further includes adding a hyperlink to said content;
said hyperlink includes an indication of a source of said indication of said target; and
said establishing said voice connection includes storing said indication of said source in a data store.

13. A computing device of claim 9, further comprising:
a communication interface (170,172); and
one or more processors (120) in communication with said storage device and said communication interface, said code includes instructions to program said one or more processors to display (400, 500,700,1014) content in a user interface and receive a selection (402, 414, 502, 514, 602, 614, 702, 714, 1102, 1106) of a subset of said content, said one or more processors determine whether said subset of said content includes an identification of a target, said one or more processors cause an establishment of a voice connection over a data network using said indication of said target and said communication interface.

14. A computing device according to claim 13, wherein:
said code programs said one or more processors to determine whether said subset of content includes said identification of said target by normalizing said subset of said content (458), matching said normalized subset of said content to a particular normalized pattern (460) of a set of normalized patterns each associated with one or more raw patterns, comparing said subset of said content to raw patterns associated with said particular normalized pattern and matching said subset of said content to one of said raw patterns associated with said particular normalized pattern (466), wherein:
said one or more processors (120) cause an establishment of a voice connection by executing a VOIP communication program (40) with said one of said raw patterns associated with said particular normalized pattern.

15. A computing device according to claim 13, wherein:
said storage device stores a VOIP communication program (40) and a user application (64);
said one or more processors cause said establishment of said voice connection by executing said VOIP communication program; and
said user interface is provided by said user application.

## Patentansprüche

1. Verfahren zum Initiieren einer Kommunikation, das folgende Schritte umfasst:
Warten auf ein Schwebe-Ereignis;
Erzeugen eines Schwebe-Ereignisses, wenn ein Benutzer über einem oder in der Nähe eines Inhalts schwebt;
Bestimmen (406, 506, 606, 706), ob der Inhalt eine Angabe eines Ziels ist, als Antwort auf das Schwebe-Ereignis;
visuelles Kenntlichmachen (410, 510, 610, 710) der Angabe des Ziels als Antwort auf das Bestimmen;
Empfangen einer Auswahl (414, 514, 614, 714) der Angabe des Ziels; und
Aufbauen (418, 520, 620, 720) einer Sprachverbindung unter Verwendung der Angabe des Ziels als Antwort auf das Empfangen der Auswahl der Angabe des Ziels.

2. Verfahren nach Anspruch 1, wobei:
die Angabe des Ziels eine Telefonnummer ist;
das Kenntlichmachen ein Hervorheben (410, 510, 610, 710) der Telefonnummer aufweist;
das Empfangen einer Auswahl ein Klicken (414, 514, 614, 714) eines Benutzers auf die hervorgehobene Telefonnummer in einem Browser unter Verwendung einer Zeigevorrichtung aufweist;
das Aufbauen einer Sprachverbindung ein Liefern der Telefonnummer an eine VOIP-Anwendung (416, 518, 618, 718) und ein Verwenden der VOIP-Anwendung aufweist,
um einen Telefonanruf zu der Telefonnummer zu machen; und
die Schritte des Bestimmens und Kenntlichmachens ohne ein Modifizieren von Code für den Inhalt durchgeführt werden.

3. Verfahren nach Anspruch 1, wobei das Bestimmen, ob der Inhalt eine Angabe eines Ziels ist, folgende Schritte umfasst:
Empfangen eines Texts; und
automatisches Bestimmen (406, 506, 606, 706), ob der Text eine richtig formatierte Telefonnummer aufweist; oder
Empfangen eines Texts;
Bestimmen eines Ländercodes (452);
Identifizieren einer Datenbank, die dem bestimmten Ländercode entspricht (454); und
Bestimmen, ob der Text eine richtig formatierte Telefonnummer aufweist, unter Verwendung der Datenbank (458, 460, 462, 466, 468).

4. Verfahren nach Anspruch 1, wobei das Bestimmen, ob der Inhalt eine Angabe eines Ziels ist, folgende Schritte umfasst:
Empfangen von Daten;
Normalisieren der Daten (458);
Abgleichen (460) der normalisierten Daten mit einem speziellen normalisierten Muster eines Satzes von normalisierten Mustern, wobei jedes einem oder mehreren Rohmustern zugeordnet ist;
Vergleichen (466) der empfangenen Daten mit Rohmustern, die dem speziellen normalisierten Muster zugeordnet sind; und
Abgleichen (466) der empfangenen Daten mit einem der Rohmuster, die dem speziellen normalisierten Muster zugeordnet sind.

5. Verfahren nach Anspruch 1, wobei:
das Bestimmen, ob der Inhalt eine Angabe eines Ziels ist, ein Empfangen von Daten, über den geschwebt wird, für einen Browser, ein Bestimmen eines Ländercodes, ein Liefern der Daten und des Ländercodes an eine Telefonnummererkennungsfunktion, ein Anweisen des Browsers, die Daten in dem Browser hervorzuheben, und ein Liefern einer Werkzeugspitze aufweist, um anzugeben, dass ein Benutzer auf die hervorgehobenen Daten klicken kann; und
das automatische Aufbauen der Sprachverbindung ein Anweisen einer Kommunikationsanwendung aufweist, einen VOIP-Telefonanruf zu machen.

6. Verfahren nach Anspruch 1, wobei:
die Angabe des Ziels auf einer Netzseite in einem Browser ohne ein Editieren von Quellcode kenntlich gemacht wird oder innerhalb einer Schnittstelle einer Anwendung kenntlich gemacht wird, die kein Browser ist.

7. Verfahren nach Anspruch 1, wobei das Bestimmen, ob der Inhalt eine Angabe eines Ziels ist, folgende Schritte umfasst:
Empfangen eines Texts von einer Anwendung;
Anfragen eines Ländercodes (450) bei einem Betriebssystem;
Identifizieren (454) einer Datenbank, die dem bestimmten Ländercode entspricht;
Bestimmen, ob der Text eine richtig formatierte Telefonnummer aufweist, unter Verwendung der Datenbank (458, 460, 462, 466, 468); und
Bestimmen einer aktuellen Position, die dem Benutzer, der schwebt, zugeordnet ist.

8. Verfahren nach Anspruch 1, wobei:
das Bestimmen, ob der Inhalt eine Angabe eines Ziels ist, folgende Schritte umfasst:
Empfangen von Daten,
Bestimmen eines Ländercodes (450),
Identifizieren einer Datenbank, die dem bestimmten Ländercode entspricht (454),
Normalisieren der Daten (458),
Abgleichen der normalisierten Daten mit einem speziellen normalisierten Muster eines Satzes von normalisierten Mustern, wobei jedes einem oder mehreren Rohmustern zugeordnet ist (460),
Vergleichen der empfangenen Daten mit Rohmustern, die dem speziellen normalisierten Muster zugeordnet sind (466), und
Abgleichen der empfangenen Daten mit einem der Rohmuster, die dem speziellen normalisierten Muster zugeordnet sind (466); und
das automatische Aufbauen einer Sprachverbindung ein Anweisen einer VOIP-Kommunikationsanwendung aufweist, einen Telefonanruf unter Verwendung des einen der Rohmuster, die dem speziellen normalisierten Muster zugeordnet sind, zu machen.

9. Rechenvorrichtung, die eine oder mehrere prozessorlesbare Speichervorrichtungen mit Code umfasst, der auf den prozessorlesbaren Speichervorrichtungen enthalten ist, wobei der Code zum Programmieren einer Verarbeitungseinheit (120) zum Durchrühren eines Verfahrens eingerichtet ist, das folgende Schritte umfasst:
Warten auf ein Schwebe-Ereignis;
Erzeugen eines Schwebe-Ereignisses, wenn ein Benutzer über oder in der Nähe eines Inhalts schwebt;
Bestimmen (406, 506, 606, 706, 852, 1008), ob der Inhalt eine Angabe eines Ziels ist,
als Antwort auf das Schwebe-Ereignis;
visuelles Kenntlichmachen (410, 510, 610, 710, 1104) der Angabe des Ziels innerhalb des dargestellten Inhalts;
Empfangen einer Auswahl (414, 514, 614, 714, 1106) der Angabe des Ziels; und
Aufbauen einer Sprachverbindung (418, 520, 620, 720, 1108) unter Verwendung der Angabe des Ziels als Antwort auf das Empfangen der Auswahl der Angabe des Ziels.

10. Rechenvorrichtung nach Anspruch 9, wobei das Bestimmen, ob der Inhalt eine Angabe eines Ziels ist, folgende Schritte aufweist:
Normalisieren (458) des Inhalts, Abgleichen (460) des normalisierten Inhalts mit einem normalisierten Muster und Abgleichen (466) des Inhalts mit einem Rohmuster, das dem normalisierten Muster zugeordnet ist;
Bestimmen, ob ein Ländercode verfügbar ist (450); und
Identifizieren einer Datenbank, die dem Ländercode entspricht (454), wobei das normalisierte Muster und das Rohmuster aus der Datenbank stammen, die dem Ländercode entspricht.

11. Rechenvorrichtung nach Anspruch 9, wobei das Bestimmen, ob der Inhalt eine Angabe eines Ziels ist, ein Normalisieren (458) des Inhalts, ein Abgleichen (460) des normalisierten Inhalts mit einem normalisierten Muster und ein Abgleichen (466) des Inhalts mit einem Rohmuster aufweist, das dem normalisierten Muster zugeordnet ist; und wobei:
die Angabe des Ziels eine Telefonnummer ist;
der Inhalt einen Abschnitt einer Website aufweist;
das Aufbauen der Sprachverbindung unter Verwendung einer VOIP-Anwendung durchgeführt ist; und
das Bestimmen zumindest teilweise durch Verwenden eines BHO durchgeführt ist.

12. Rechenvorrichtung nach Anspruch 9, wobei das Bestimmen, ob der Inhalt eine Angabe eines Ziels ist, ein Normalisieren (458) des Inhalts, ein Abgleichen (460) des normalisierten Inhalts mit einem normalisierten Muster und ein Abgleichen (466) des Inhalts mit einem Rohmuster aufweist, das dem normalisierten Muster zugeordnet ist; und wobei:
die Angabe des Ziels eine Telefonnummer ist;
das Verfahren ferner ein Hinzufügen eines Hyperlinks zu dem Inhalt aufweist;
der Hyperlink eine Angabe einer Quelle der Angabe des Ziels aufweist; und
das Aufbauen der Sprachverbindung ein Speichern der Angabe der Quelle in einem Datenspeicher aufweist.

13. Rechenvorrichtung nach Anspruch 9, die ferner Folgendes umfasst:
eine Kommunikationsschnittstelle (170, 172); und
einen oder mehrere Prozessoren (120), die mit der Speichervorrichtung und der Kommunikationsschnittstelle kommunizieren, wobei der Code Befehle zum Programmieren des einen oder der mehreren Prozessoren zum Darstellen eines Inhalts in einer Benutzerschnittstelle (400, 500, 700, 1014) und zum Empfangen einer Auswahl einer Untermenge des Inhalts (402, 414, 502, 514, 602, 614, 702, 714, 1102, 1106) aufweist, wobei der eine oder die mehreren Prozessoren bestimmen, ob die Untermenge des Inhalts eine Identifikation eines Ziels aufweist, und wobei der eine oder die mehreren Prozessoren einen Aufbau einer Sprachverbindung über ein Datennetzwerk unter Verwendung der Angabe des Ziels und der Kommunikationsschnittstelle bewirken.

14. Rechenvorrichtung nach Anspruch 13, wobei:
der Code den einen oder die mehreren Prozessoren programmiert, um zu bestimmen, ob die Untermenge des Inhalts die Identifikation des Ziels aufweist, durch ein Normalisieren der Untermenge des Inhalts (458), ein Abgleichen der normalisierten Untermenge des Inhalts mit einem speziellen normalisierten Muster (460) eines Satzes von normalisierten Mustern, wobei jedes einem oder mehreren Rohmustern zugeordnet ist, ein Vergleichen der Untermenge des Inhalts mit Rohmustern, die dem speziellen normalisierten Muster zugeordnet sind, und ein Abgleichen der Untermenge des Inhalts mit einem der Rohmuster, die dem speziellen normalisierten Muster zugeordnet sind (466), wobei:
der eine oder die mehreren Prozessoren (120) einen Aufbau einer Sprachverbindung durch ein Ausführen eines VOIP-Kommunikationsprogramms (40) mit dem einen der Rohmuster bewirken, die dem speziellen normalisierten Muster zugeordnet sind.

15. Rechenvorrichtung nach Anspruch 13, wobei:
die Speichervorrichtung ein VOIP-Kommunikationsprogramm (40) und eine Benutzeranwendung (64) speichert;
der eine oder die mehreren Prozessoren den Aufbau der Sprachverbindung durch ein Ausführen des VOIP-Kommunikationsprogramms bewirken; und
die Benutzerschnittstelle von der Benutzeranwendung bereitgestellt ist.

## Revendications

1. Procédé pour établir une communication, comportant les étapes consistant à :
attendre un événement de pointage de la souris,
générer un événement de pointage de la souris lorsqu'un utilisateur pointe sur un contenu ou à proximité de celui ci,
déterminer (406, 506, 606, 706) si ledit contenu est une indication d'une cible en réponse à un événement de pointage de la souris,
identifier visuellement (410, 510, 610, 710) ladite indication de ladite cible en réponse à ladite détermination,
recevoir une sélection (414, 514, 614, 714) de ladite indication de ladite cible, et
établir (418, 520, 620, 720) une connexion vocale en utilisant ladite indication de ladite cible en réponse à ladite réception de ladite sélection de ladite indication de ladite cible.

2. Procédé selon la revendication 1, dans lequel :
ladite indication de ladite cible est un numéro de téléphone,
ladite identification inclut la mise en surbrillance (410, 510, 610, 710) dudit numéro de téléphone,
ladite réception d'une sélection inclut un clic d'un utilisateur (414, 514, 614, 714) sur ledit numéro de téléphone mis en surbrillance dans un navigateur en utilisant un dispositif de pointage,
ledit établissement d'une connexion vocale inclut de fournir ledit numéro de téléphone à une application VOIP (416, 518, 618, 718) en utilisant ladite application VOIP pour effectuer un appel téléphonique audit numéro de téléphone, et
lesdites étapes de détermination et d'identification sont exécutées sans code de modification pour ledit contenu.

3. Procédé selon la revendication 1, dans lequel ladite étape déterminant si le contenu est une indication d'une cible comporte les étapes consistant à :
recevoir du texte, et
déterminer automatiquement (406, 506, 606, 706) si ledit texte inclut un numéro de téléphone correctement formaté, ou
recevoir du texte,
déterminer un code de pays (452),
identifier une base de données correspondant audit code de pays déterminé (454), et
déterminer si ledit texte inclut un numéro de téléphone correctement formaté en utilisant ladite base de données (458, 460, 462, 466, 468).

4. Procédé selon la revendication 1, dans lequel ladite étape déterminant si un contenu est une indication d'une cible comporte les étapes consistant à :
recevoir des données,
normaliser lesdites données (458),
mettre en correspondance (460) lesdites données normalisées avec un modèle normalisé particulier d'un ensemble de modèles normalisés chacun étant associé à un ou plusieurs modèles bruts,
comparer (466) lesdites données reçues à des modèles bruts associés audit modèle normalisé particulier, et
mettre en correspondance (466) lesdites données reçues avec l'un desdits modèles bruts associés audit modèle normalisé particulier.

5. Procédé selon la revendication 1, dans lequel :
ladite étape déterminant si un contenu est une indication d'une cible inclut de recevoir des données étant pointées pour un navigateur, de déterminer un code de pays, de délivrer lesdites données et ledit code de pays à une fonction de reconnaissance de numéro de téléphone, d'ordonner audit navigateur de mettre en surbrillances lesdites données dans ledit navigateur, et de délivrer une info-bulle pour indiquer qu'un utilisateur peut cliquer sur lesdites données mises en surbrillance, et
ledit établissement de manière automatique de ladite connexion vocale inclut d'ordonner à une application de communication d'effectuer un appel téléphonique VOIP.

6. Procédé selon la revendication 1, dans lequel :
ladite indication de ladite cible est identifiée sur une page de la toile mondiale dans un navigateur sans éditer de code source, ou est identifiée dans une interface d'une application qui n'est pas un navigateur.

7. Procédé selon la revendication 1, dans lequel ladite étape déterminant si ledit contenu est une indication d'une cible comporte les étapes consistant à :
recevoir du texte en provenance d'une application,
demander un code de pays (450) depuis un système d'exploitation,
identifier (454) une base de données correspondant audit code de pays déterminé,
déterminer si ledit texte inclut un numéro de téléphone correctement formaté en utilisant ladite base de données (458, 460, 462, 466, 468), et
déterminer une position courante associée audit pointage de souris par l'utilisateur.

8. Procédé selon la revendication 1, dans lequel :
ladite étape déterminant si un contenu est une indication d'une cible comporte les étapes consistant à :
recevoir des données,
déterminer un code de pays (450),
identifier une base de données correspondant audit code de pays détermin2 (454),
normaliser lesdites données (458),
mettre en correspondance lesdites données normalisées avec un modèle normalisé particulier d'un ensemble de modèles normalisés chacun étant associé à un ou plusieurs modèles bruts (460),
comparer lesdites données reçues à un modèle brut associé audit modèle normalisé particulier (466), et
mettre en correspondances lesdites données reçues avec l'un desdits modèles bruts associés audit modèle normalisé particulier (466), et
ledit établissement de manière automatique d'une connexion vocale inclut d'ordonner à une application de communication VOIP d'effectuer un appel téléphonique en utilisant l'un desdits modèles bruts associés audit modèle normalisé particulier.

9. Dispositif informatique, comportant un ou plusieurs dispositifs de mémorisation lisibles par processeur ayant du code incorporé sur lesdits dispositifs de mémorisation lisibles par processeur, ledit code étant destiné à programmer une unité de traitement (120) afin de mettre en oeuvre un procédé comportant les étapes consistant à :
attendre un événement de pointage de la souris,
générer un événement de pointage de la souris lorsqu'un utilisateur pointe sur un contenu ou à proximité de celui ci,
déterminer (406, 506, 606, 706, 852, 1008) si ledit contenu est une indication d'une cible en réponse à un événement de pointage de la souris,
identifier visuellement (410, 510, 610, 710, 1104) ladite indication de ladite cible dans un contenu affiché,
recevoir une sélection (414, 514, 614, 714, 1106) de ladite indication de ladite cible, et
établir une connexion vocale (418, 520, 620, 720, 1108) en utilisant ladite indication de ladite cible en réponse à ladite réception de ladite sélection de ladite indication de ladite cible.

10. Dispositif informatique selon la revendication 9, dans lequel ladite étape déterminant si le contenu est une indication d'une cible inclut les étapes consistant à :
normaliser (458) ledit contenu, mettre en correspondance (460) ledit contenu normalisé avec un modèle normalisé, et mettre en correspondance (466) ledit contenu avec un modèle brut associé audit modèle normalisé,
déterminer si un code de pays est disponible (450), et
identifier une base de données correspondant audit code de pays (454), ledit modèle normalisé et ledit modèle brut provenant de ladite base de données correspondant audit code de pays.

11. Dispositif informatique selon la revendication 9, dans lequel ladite étape déterminant si le contenu est une indication d'une cible inclut les étapes consistant à normaliser (458) ledit contenu, mettre en correspondance (460) ledit contenu normalisé avec un modèle normalisé, et mettre en correspondance (466) ledit contenu avec un modèle brut associé audit modèle normalisé, et dans lequel :
ladite indication de ladite cible est un numéro de téléphone,
ledit contenu inclut une partie d'un site de la toile mondiale,
ledit établissement de ladite connexion vocale est exécuté en utilisant une application VOIP, et
ladite détermination est exécutée au moins partiellement en utilisant un BHO.

12. Dispositif informatique selon la revendication 9, dans lequel ladite étape déterminant si un contenu est une indication d'une cible inclut les étapes consistant à normaliser (458) ledit contenu, mettre en correspondance (460) ledit contenu normalisé avec un modèle normalisé, et mettre en correspondance (466) ledit contenu avec un modèle brut associé audit modèle normalisé, et dans lequel :
ladite indication de ladite cible est un numéro de téléphone,
ledit procédé inclut en outre l'ajout d'un hyperlien audit contenu,
ledit hyperlien inclut une indication d'une source de ladite indication de ladite cible, et
ledit établissement de ladite connexion vocale inclut de mémoriser ladite indication de ladite source dans une mémoire de données.

13. Dispositif informatique selon la revendication 9, comportant en outre :
une interface de communication (170, 172), et
un ou plusieurs processeurs (120) en communication avec ledit dispositif de mémorisation et ladite interface de communication, ledit code inclut des instructions pour programmer ledit processeur ou lesdits processeurs afin d'afficher (400, 500, 700, 1014) un contenu d'une interface utilisateur et recevoir une sélection (402, 414, 502, 514, 602, 614, 702, 714, 1102, 1106) d'un sous-ensemble dudit contenu, ledit processeur ou lesdits processeurs déterminent si ledit sous-ensemble dudit contenu inclut une identification d'une cible, ledit processeur ou lesdits processeurs engendrent l'établissement d'une connexion vocale sur un réseau de données en utilisant ladite indication de ladite cible et ladite interface de communication.

14. Dispositif informatique selon la revendication 13, dans lequel :
ledit code programme ledit processeur ou lesdits processeurs pour déterminer si ledit sous-ensemble de contenu inclut ladite identification de ladite cible en normalisant ledit sous-ensemble dudit contenu (458), en mettant en correspondance ledit sous-ensemble normalisée dudit contenu avec un modèle normalisé particulier (460) d'un ensemble de modèles normalisés chacun étant associé à un ou plusieurs modèles bruts, en comparant ledit sous-ensemble dudit contenu à des modèles bruts associés audit modèle normalisé particulier et en mettant en correspondance ledit sous-ensemble dudit contenu avec l'un desdits modèles bruts associés audit modèle normalisé particulier (466), dans lequel :
ledit processeur ou lesdits processeurs (120) engendrent l'établissement d'une connexion vocale en exécutant un programme de communication VOIP (40) avec l'un desdits modèles bruts associés audit modèle normalisé particulier.

15. Dispositif informatique selon la revendication 13, dans lequel :
ledit dispositif de mémorisation mémorise un programme de communication VOIP (40) et une application utilisateur (64),
ledit processeur ou lesdits processeurs engendrent ledit établissement de ladite connexion vocale en exécutant ledit programme de communication VOIP, et
ladite interface utilisateur est fournie par ladite application utilisateur.
